Europäisches Patentamt

European Patent Office

Office européen des brevets

(11) Numéro de publication : **0 479 652 A1**

# (12) DEMANDE DE BREVET EUROPEEN

(21) Numéro de dépôt : **91402575.4**

(22) Date de dépôt : **26.09.91**

(51) Int. Cl.⁵ : **B60P 1/44,** B60Q 1/30

(30) Priorité : **02.10.90 FR 9012131**

(43) Date de publication de la demande :
**08.04.92 Bulletin 92/15**

(84) Etats contractants désignés :
**AT BE CH DE DK ES GB IT LI LU NL SE**

(71) Demandeur : **HYDRIS SOCIETE ANONYME
Z.I. Bellevue, B.P. 37
F-35220 Chateaubourg (FR)**

(72) Inventeur : **Tortellier, Christian
Le Ponloup, Servon sur Vilaine
F-35530 Noyal Sur Vilaine (FR)**
Inventeur : **Delatouche, Gérard
4, rue du Domaine
F-35230 Orgeres (FR)**

(74) Mandataire : **Hoisnard, Jean-Claude et al
Cabinet Beau de Loménie 55, rue
d'Amsterdam
F-75008 Paris (FR)**

(54) **Hayon élévateur comportant un dispositif de signalisation.**

(57)    L'invention est relative à un hayon élévateur monté sur un véhicule (1) et comportant une plate-forme (4) susceptible d'être disposée horizontalement, ledit hayon comportant également un dispositif de signalisation (10).

Selon l'invention, les divers dispositifs de signalisation sont placés en des emplacements (4A) de la plate-forme où celle-ci est magnétisable, chaque dispositif de signalisation comprenant un socle magnétique (6) placé à l'un desdits emplacements et y étant fixé magnétiquement, et, un corps repérable (10), et comprenant en outre un support souple (7) interposé entre le socle (6) et le corps (10) et réalisant le montage du corps sur le socle.

Une application est la réalisation d'un hayon relativement peu sensible aux détériorations accidentelles.

FIG. 3

EP 0 479 652 A1

Jouve, 18, rue Saint-Denis, 75001 PARIS

L'invention est relative à un hayon élévateur attelé au plateau de transport d'un véhicule et comportant une plate-forme de chargement, qui est susceptible d'être disposée horizontalement dans au moins une position de travail, ledit hayon comportant également un dispositif de signalisation de la plate-forme de chargement dans ladite position de travail.

Divers types de dispositifs de signalisation sont connus parmi lesquels il est possible de citer les drapeaux fixés sur la partie externe de la plate-forme ; les lampes fixées sur la plate-forme ou sur les bords latéraux de la plate-forme.

Ces dispositifs de signalisation ne donnent pas toujours entière satisfaction aux utilisateurs. Certains, en effet, se dégradent rapidement ; les drapeaux appartiennent à cette catégorie. D'autres, telles les lampes, sont détériorés par les chocs qui se produisent pendant la manutention des marchandises

L'invention entend remédier aux inconvénients précités et, à cet effet, dans un hayon élévateur tel que précédemment défini, selon l'invention, les divers dispositifs de signalisation sont susceptibles d'être placés en des emplacements déterminés de la plate-forme de chargement où celle-ci est magnétisable, chaque dispositif de signalisation comprenant un socle magnétique susceptible d'être placé à l'un desdits emplacements et d'y être fixé magnétiquement, un corps repérable, et un support souple interposé entre le socle magnétique et le corps repérable et réalisant le montage du corps repérable sur le socle magnétique.

Les avantageuses dispositions suivantes sont en outre de préférence adoptées :

– la plate-forme est réalisée en un matériau magnétisable ;

– le corps repérable a une surface externe optiquement réfléchissante ;

– le corps repérable comprend un cylindre creux présentant deux extrémités, l'une de ces extrémités étant fixée sur le support souple, l'autre extrémité étant susceptible d'être obturée soit par un couvercle, soit par le socle d'une lampe électrique de signalisation, l'intérieur dudit cylindre étant susceptible de recevoir une source d'énergie électrique autonome, telle que des piles électriques, apte à réaliser l'alimentation en énergie électrique de ladite lampe ;

– le corps repérable présente deux extrémités, l'une d'elles étant fixée sur le support souple, l'autre extrémité étant susceptible de recevoir le socle d'une lampe électrique de signalisation qui est, elle-même, susceptible d'être reliée à une source d'énergie électrique non contenue dans ledit corps repérable.

L'avantage principal d'un hayon élévateur conforme à l'invention réside dans l'aptitude du ou des dispositifs de signalisation utilisés d'esquiver les chocs destructeurs grâce à la déformation élastique du support souple et aux déplacements possibles du corps repérable sans détérioration de celui-ci.

L'invention sera mieux comprise, et des caractéristiques secondaires et leurs avantages apparaîtront au cours de la description de réalisations donnée ci-dessous à titre d'exemple.

Il est entendu que la description et les dessins ne sont donnés qu'à titre indicatif et non limitatif.

Il sera fait référence aux dessins annexés, dans lesquels :

– la figure 1 est une vue perspective d'un hayon élévateur monté à l'arrière d'un véhicule, muni de dispositifs de signalisation selon une première réalisation conforme à l'invention ;

– la figure 2 est une vue perspective d'un des dispositifs de signalisation utilisés avec le hayon de la figure 1 ;

– la figure 3 est une vue perspective analogue à celle de la figure 1, représentant un hayon élévateur muni de dispositifs de signalisation selon une deuxième réalisation conforme à l'invention ;

– la figure 4 est une vue perspective d'un des dispositifs de signalisation utilisés avec le hayon de la figure 3 ; et,

– la figure 5 est une vue perspective d'un hayon élévateur monté à l'arrière d'un véhicule, muni de dispositifs de signalisation selon une troisième réalisation conforme à l'invention.

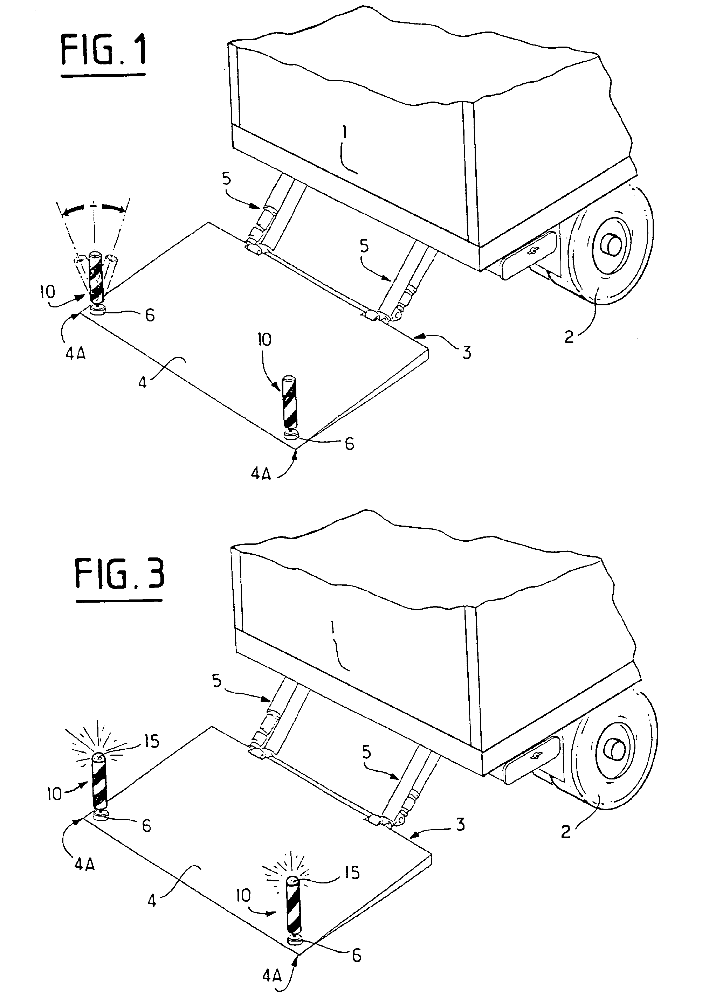

Les figures 1, 3 et 5 représentent la partie arrière d'un camion, plus généralement le plateau mobile d'un véhicule. Le plateau 1 de transport des marchandises est suspendu, de manière classique, aux roues arrière 2 du véhicule. Un hayon élévateur 3, présentant une plate-forme 4 de chargement, est relié au plateau 1 par deux parallélogrammes déformables 5 qui, après mise en place horizontale de la face supérieure de la plate-forme 4, permettent de régler le niveau par rapport au sol de cette face, tout en maintenant l'horizontalité de ladite face.

Dans ces trois réalisations, la plate-forme 4 est réalisée en acier magnétisable. En variante, la plate-forme 4 pourrait être réalisée en un autre matériau, non magnétisable, mais être munie en des emplacements déterminés, notamment à sa périphérie, de plots ou de pièces rapportées magnétisables.

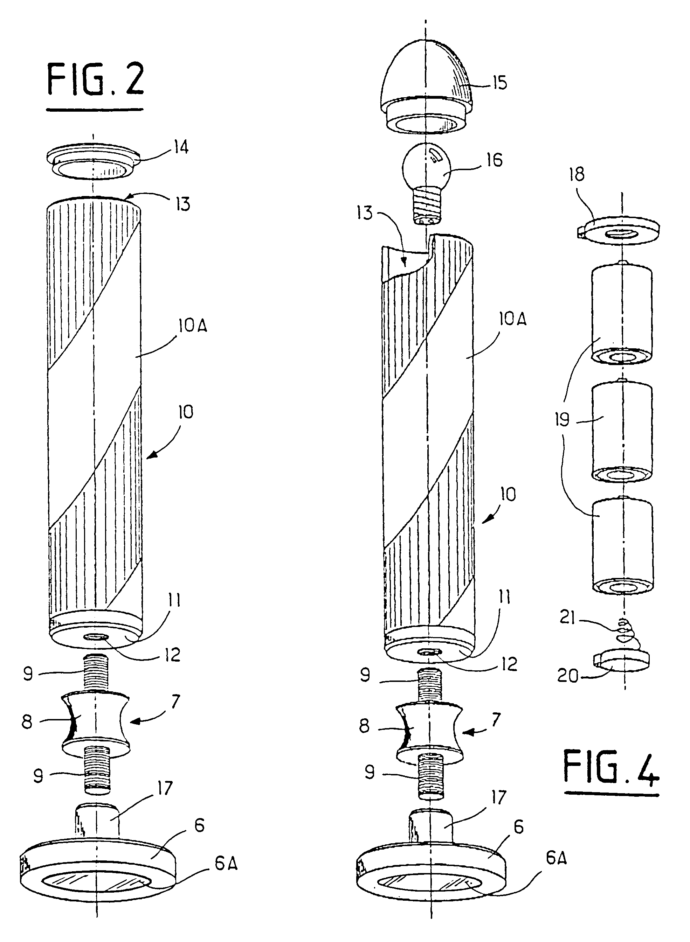

Les figures 2 et 4 représentent un dispositif de signalisation constitué par :

– un socle inférieur 6, magnétique, dont la face inférieure 6A est plane et susceptible d'être reçue par lesdits emplacements déterminés horizontaux de la plate-forme 4, dans l'une de ses positions horizontales de travail ;

– un support souple 7 comportant un volume central 8 d'élastomère, compris entre deux armatures de chacune desquelles émerge une vis 9 ;

– un tube cylindrique creux 10, disposé sensiblement verticalement, dont l'extrémité inférieure constitue un fond 11, muni d'un taraudage 12 apte à coopérer avec la vis 9 supérieure du support souple 7 pour réaliser la fixation du tube 10 sur le support souple 7, et dont l'extrémité supérieure 13 constitue une ouverture apte à recevoir soit un bouchon 14, soit le socle 18 et le globe de protection 15 d'une lampe électrique 16. La vis 9 inférieure du support souple 7 est elle-même apte à coopérer avec le taraudage que comporte une embase 17 solidaire de la face supérieure du socle 6.

Les faces externes 10A des tubes cylindriques 10 des figures 2 et 4 sont recouvertes de bandes de revêtements réflecteurs des rayons lumineux.

Sur la figure 4, sont représentés à côté du tube 10 (qui est identique à celui de la figure 2) trois piles électriques 19, une plaque inférieure 20 munie d'un ressort 21 disposé sur sa face supérieure, et le socle 18 de la lampe électrique, l'ensemble pouvant être placé à l'intérieur du tube 10 et alimenter la lampe électrique 16 en énergie électrique.

Deux dispositifs de signalisation analogues à celui de la figure 2 et assemblés, sont montés par application de leurs socles magnétiques respectifs 6 aux angles extérieurs 4A de la plate-forme 4 de la figure 1 et fixation desdits socles sur ladite plate-forme magnétisable. On observe que l'un des tubes 10 vibre, ayant été écarté de sa position verticale stable au cours de la manutention d'un objet sur la plate-forme 4, sans être endommagé, le support souple 8 ayant permis le déplacement momentané, sans détérioration dudit tube 10.

La figure 3 représente la plate-forme 4 munie, dans les zones des angles 4A, de dispositifs de signalisation analogues à celui de la figure 4. Les piles 19 alimentent les lampes 16 contenues dans les tubes 10 et permettent l'émission de signaux lumineux de sécurité.

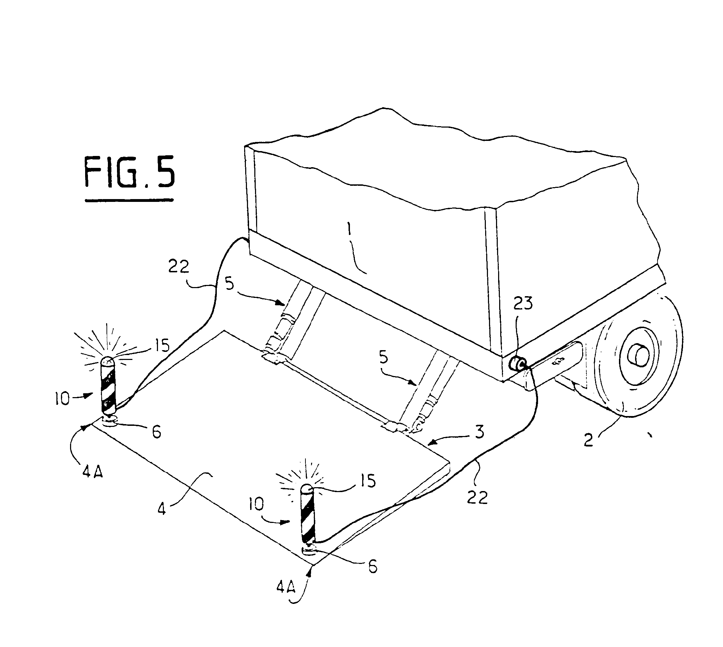

La figure 5 représente l'utilisation de deux dispositifs de signalisation analogues à celui de la figure 4, mais alimentés non pas par des piles 19, mais par l'accumulateur électrique central du véhicule, par l'intermédiaire de fils électriques 22 de raccordement et de prises électriques 23 de branchement sur ledit accumulateur électrique. Naturellement, l'aptitude à émettre des signaux lumineux de sécurité est identique dans les réalisations des figures 3 et 5.

A noter, qu'en variante de la réalisation de la figure 4, les piles 19 peuvent être remplacées par un accumulateur électrique autonome, rechargeable par exemple, et, dans ce cas, il est intéressant de prévoir, sur le véhicule lui-même, des emplacements de rangement des corps 10, qui permettent la recharge automatique des accumulateurs à partir du réseau électrique de véhicule.

Par ailleurs, dans les réalisations des figures 3, 4 et 5, les faces 10A des tubes 10 pourraient ne pas réfléchir la lumière. Dans les réalisations représentées, ces faces 10A comportent le même revêtement réfléchissant que celui du dispositif de signalisation de la figure 2.

Il va de soi également que les lampes 16 ont les caractéristiques convenant à leur usage, et sont, en l'espèce, de préférence clignotantes.

Bien entendu, outre la protection contre les chocs et les heurts, procurée par la souplesse de leurs supports 8, les dispositifs de signalisation représentés présentent l'avantage de pouvoir être mis en place et retirés instantanément, et à tous emplacements choisis, initialement prévus magnétisables. D'où une souplesse d'utilisation inconnue auparavant.

Il peut en outre être observé que si un heurt d'un corps 10 avait une amplitude dépassant la capacité de déformation élastique du support souple 7, celui-ci pourrait se détacher de la plate-forme 4 par séparation du socle 6 par rapport à la plate-forme, ce qui, là aussi, évite l'endommagement du dispositif de signalisation.

De plus, l'aptitude du socle magnétique 6 à une fixation instantanée sur la plate-forme 4 permet, après chargement, de ranger chaque dispositif de signalisation en un emplacement où il est protégé.

L'autonomie de l'alimentation en énergie électrique (figures 3 et 4), ou la facilité et la souplesse du raccordement à l'accumulateur central (figure 5) rendent en outre aisée l'utilisation de ces nouvelles dispositions en tous lieux où elle est nécessaire. A noter qu'il reste naturellement possible, dans des lieux réguliers de manutention, de prévoir des alimentations en énergie électriques analogues à celles de la figure 5, mais par l'intermédiaire de prises fixes, n'appartenant pas au véhicule.

L'invention n'est pas limitée aux réalisations décrites, mais en couvre au contraire toutes les variantes susceptibles de leur être apportées sans sortir de leur cadre, ni de leur esprit.

**Revendications**

1. Hayon élévateur attelé au plateau de transport (1) d'un véhicule et comportant une plate-forme de chargement (4) susceptible d'être disposée horizontalement dans au moins une position de travail, ledit hayon comportant également au moins un dispositif de signalisation (10) de la plate-forme de chargement dans ladite position de travail,

   caractérisé en ce que, de manière connue en soi, les divers dispositifs de signalisation sont susceptibles d'être placés en des emplacements déterminés (4A) de la plate-forme de chargement ou celle-ci est magnétisable, chaque dispositif de signalisation comprenant, d'une part un socle magnétique (6) susceptible d'être placé à l'un desdits emplacements et d'y être fixé magnétiquement, d'autre part un corps repérable (10), et en ce que chaque dispositif de signalisation comprend en outre un support souple (7), qui est interposé entre le socle magnétique (6) et le corps repérable (10) et qui réalise le montage dudit corps repérable sur ledit socle magnétique.

2. Hayon élévateur selon la revendication 1, caractérisé en ce que la plate-forme (4) est réalisée en un matériau magnétisable.

3. Hayon élévateur selon l'une quelconque des revendications 1 et 2, caractérisé en ce que le corps repérable (10) a une surface externe (10A) optiquement réfléchissante.

4. Hayon élévateur selon l'une quelconque des revendications 1 à 3, caractérisé en ce que le corps repérable comprend un cylindre creux (10) présentant deux extrémités, l'une (11) de ces extrémités étant fixée sur le support souple (7), l'autre extrémité (13) étant susceptible d'être obturée soit par un couvercle (14), soit par le socle (18-15) d'une lampe électrique (16) de signalisation, l'intérieur dudit cylindre étant susceptible de recevoir une source d'énergie électrique autonome (19), telle que des piles électriques, apte à réaliser l'alimentation en énergie électrique de ladite lampe (16).

5. Hayon élévateur selon l'une quelconque des revendications 1 à 3, caractérisé en ce que le corps repérable (10) présente deux extrémités, l'une d'elles (11) étant fixée sur le support souple (7), l'autre extrémité (13) étant susceptible de recevoir le socle (18-15) d'une lampe électrique (16) de signalisation qui est, elle-même, susceptible d'être reliée (22-23) à une source d'énergie électrique non contenue dans ledit corps repérable.

# FIG.1

# FIG.3

# FIG. 2

# FIG. 4

FIG.5

Office européen
des brevets

**RAPPORT DE RECHERCHE EUROPEENNE**

Numero de la demande

EP 91 40 2575

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 017 620 (SCHWEIZERISCHE ALUMINIUM)<br>* page 2, ligne 23 - ligne 33; revendications 1,3; figures 1-4 * | 1-5 | B60P1/44<br>B60Q1/30 |
| A | WO-A-8 911 984 (ANDERSON)<br>* page 5, ligne 14 - ligne 26; revendications 2-5; figures 1-3 * | 1,4 | |
| A | DE-U-7 804 742 (DITTRICH)<br>* revendications 1,8,9,13-15; figures 1-4 * | 1,3,4 | |
| A | DE-U-8 530 444 (VERHULST)<br>* revendication 1; figure 1 * | 1 | |

DOMAINES TECHNIQUES
RECHERCHES (Int. Cl.5)

B60P
B60Q

Le présent rapport a été établi pour toutes les revendications

| Lieu de la recherche | Date d'achèvement de la recherche | Examinateur |
|---|---|---|
| LA HAYE | 12 DECEMBRE 1991 | Jan Nordlund |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)